# EUROPÄISCHE PATENTSCHRIFT

(11) **EP 0 957 105 B1**
(45) Veröffentlichungstag und Bekanntmachung des Hinweises auf die Patenterteilung: **02.06.2004**
(21) Anmeldenummer: 99107822.1
(22) Anmeldetag: 20.04.1999
(51) Int. Cl.: C07F 7/20, C07F 7/18

(54) **Minderung von Resthalogengehalten und Farbzahlverbesserung in Alkoxysilanen oder Alkoxysilan-basierenden Zusammensetzungen**
Reduction of residual chlorine content and of discoloration of alkoxysilanes or alkoxysilane-based compositions
Procédé de diminution de la teneur en chlorure résiduel, et de la discoloration d'alkoxysilanes et compositions d'alkoxysilanes

(30) Priorität: 12.05.1998 DE 19821156
(43) Veröffentlichungstag der Anmeldung: 17.11.1999
(73) Patentinhaber: Degussa AG, 40474 Düsseldorf (DE)
(72) Erfinder: Mack, Helmut, Dr., 79618 Rheinfelden (DE); Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Laven, Ralf, Dr., 79739 Schwörstadt (DE); Monkiewicz, Jaroslaw, Dr., 79618 Rheinfelden (DE); Standke, Burkhard, Dr., 79540 Lörrach (DE)

(56) Entgegenhaltungen:
- EP-A- 0 282 846

## Beschreibung

Die vorliegende Erfindung betrifft ein Verfahren zur Minderung von Resthalogengehalten in Alkoxysilanen oder Alkoxysilan-basierenden Zusammensetzungen. Ferner betrifft die vorliegende Erfindung auch die Verbesserung der Farbzahl in Alkoxysilanen oder Alkoxysilan-basierenden Zusammensetzungen.

Alkoxysilane und Alkoxysilan-basierende Zusammensetzungen finden in vielen Bereichen Anwendung: Als Haftvermittler, als Trennmittel, als Vernetzer in Polymeren, als Zusatzstoffe in Farben und Lacken, für die Hydrophobierung von Oberflächen, u. a. für Textilien, Leder und insbesondere für den Schutz von Bauten und Fassaden, für die Buchkonservierung, für die besondere Modifizierung der Eigenschaften von Oberflächen, wie die Beschichtung von Glasfasern oder die Silanisierung von Füllstoffen und Pigmenten, aber auch für die Verbesserung der rheologischen Eigenschaften von Polymerdispersionen und Emulsionen, um nur einige Beispiele zu nennen.

Für die Herstellung von Alkoxysilanen setzt man in der Regel Halogensilane, insbesondere Chlorsilane, ein. So erhält man beispielsweise durch Umsetzung eines Alkyltrichlorsilans mit Methanol ein Alkyltrimethoxysilan unter Freisetzung von HCl. Auch nach destillativer Reinigung des Produkts können Restmengen an saurem Chlorid in der Größenordnung von rd. 50 bis 500 Gew.-ppm im Alkoxysilan verbleiben. Auch bei der Herstellung von beispielsweise Aminoalkyltrialkoxysilanen - Umsetzen von Chloralkyltrialkoxysilanen mit NH₃ oder einem Alkylamin und Abtrennen des dabei vorwiegend in salzartiger Form anfallenden Ammoniumchlorids durch Filtration - verbleiben Restmengen an saurem bzw. hydrolysierbarem Chlorid hydrolysierbarem Chlor im Produkt verbleiben, beispielsweise durch nicht umgesetzte Edukte wie Chloralkylalkoxysilane.

Heutzutage ist man bestrebt, Alkoxysilane, insbesondere oligomere Alkoxysiloxane oder darauf basierende Silansysteme, und Produkte, die Alkoxysilane enthalten, vgl. z. B. EP 0 273 867 B1, DE 27 51 714 C2, sowie Alkoxysilan-basierende Zusammensetzungen, wie sie beispielsweise aus den Schriften EP 0 049 365 A2, EP 0 518 057 A1, EP 0 675 128 A1, EP 0 716 127 A2 oder EP 0 716 128 A2, um nur einige zu nennen, hervorgehen, mit möglichst geringen Halogenidgehalten, insbesondere saure bzw. hydrolysierbare Chloride, herzustellen.

Es ist bekannt, den Resthalogengehalt unter anderem durch Umsetzung bzw. Neutralisation mit Alkalialkoholaten, wie z. B. Natriummethanolat, und Abtrennen von dabei entstandenem Salz, aus Alkoxysilanen zu entfernen (EP 0 282 846 A2, EP 0 741 137 A1). Solche Neutralisationsverfahren sind meist aufwendig und im allgemeinen nicht auf stabilisierte Alkoxysilan-basierende Zusammensetzungen anwendbar.

Es ist auch bekannt, Aktivkohle als Adsorbens zur Entfernung unter anderem von Chlor aus Wasser einzusetzen (Römpp Chemie Lexikon, 9. Auflage, Seite 83 "Aktivkohle" und Seite 59 "Adsorbentien").

Ferner ist es bekannt (Chemical Abstracts Vol. 117 (1992), S. 713, CA 117: 251554n), Chloridverbindungen aus Hydrogen-, Alkyl- sowie Arylalkoxysilanen unter Verwendung einer mit Alkali behandelten Aktivkohle und basischen Ionenaustauscherharzen zu entfernen.

DE-OS 28 07 589 lehrt Diphenylen und andere Verunreinigungen aus unreinen Silanen und Siloxanen durch Inkontaktbringen mit einem Festbett aus Molekularsieben und Kohle zu entfernen.

US 5 567 836 offenbart ein Verfahren, bei dem man Methyltrichlorsilan von Dimethyldichlorsilan unter Verwendung von Aktivkohle trennt.

Der vorliegenden Erfindung lag die Aufgabe zugrunde, ein Verfahren bereitzustellen, das es ermöglicht, Resthalogengehalte, insbesondere Restchloridgehalte, in Alkoxysilanen oder in Alkoxysilan-basierenden Zusammensetzungen in einfacher und wirtschaftlicher Weise zu mindern.

Die gestellte Aufgabe wird erfindungsgemäß entsprechend den Angaben der Patentansprüche gelöst.

Es wurde überraschenderweise gefunden, daß man in einfacher und wirtschaftlicher Weise saure bzw. hydrolysierbare Restchloridgehalte aus Alkoxysilanen oder aus Alkoxysilan-basierenden Zusammensetzungen, beispielsweise entsprechender in Wasser gelöster Silanhydrolysate bzw. Silankondensate, durch eine Behandlung mit Aktivkohle nahezu quantitativ entfernen kann, wobei hier auch Lösemittel, beispielsweise Alkohole, wie Methanol, Ethanol, Isopropanol, 2-Methoxyethanol, oder Wasser oder aliphatische Kohlenwasserstoffe, wie Hexan, Heptan, oder Isomerengemische sowie Gemische aliphatischer Kohlenwasserstoffe, zugegen sein können.

Es wurde ferner gefunden, daß in vorteilhafter Weise durch eine erfindungsgemäße Aktivkohlebehandlung neben der Entfernung des Gehalts an hydrolysierbarem Chlorid bis auf Restmengen auch der Gehalt an Gesamtchlorid im Produkt überproportional reduziert werden kann.

Darüber hinaus wird bei Anwendung von Aktivkohle nach dem vorliegenden Verfahren in vorteilhafter und überraschender Weise auch eine gleichzeitige Verbesserung der Farbzahl behandelter Alkoxysilane sowie Alkoxysilanbasierender Zusammensetzungen gefunden.

Der Gegenstand der vorliegenden Erfindung ist ein Verfahren zur Minderung des Resthalogengehalts in Alkoxysilanen oder in Alkoxysilan-basierenden Zusammensetzungen, das dadurch gekennzeichnet ist, daß man das Alkoxysilan oder die Alkoxysilan-basierende Zusammensetzung mit Aktivkohle behandelt.

Insbesondere handelt es sich bei den besagten Halogeniden um sogenannte hydrolysierbare und/oder nicht hydrolysierbare Chlorverbindungen.

Im allgemeinen wird die erfindungsgemäße Behandlung von Alkoxysilanen oder Alkoxysilan-basierenden Zusammensetzungen derart durchgeführt, daß man das Alkoxysilan oder die Alkoxysilan-basierende Zusammensetzung mit Aktivkohle in Kontakt bringt und gegebenfalls unter Rühren einwirken läßt.

Geeigneterweise führt man die Behandlung des Alkoxysilans oder der Alkoxysilan-basierenden Zusammensetzung in einem Temperaturbereich zwischen 0 und 200 °C, vorzugsweise von 10 bis 100 °C, besonders vorzugsweise von 20 bis 80 °C, durch.

Vorteilhaft ist dabei eine Behandlungsdauer zwischen 1 Minute und 8 Stunden, vorzugsweise von 2 Minuten bis 1 Stunde, besonders vorzugsweise von 5 bis 20 Minuten, wobei eine gute Durchmischung ebenfalls von Vorteil sein kann.

Im allgemeinen trennt man anschließend die Aktivkohle vom Alkoxysilan oder der behandelten Zusammensetzung, - beispielsweise durch Filtration.

Vorzugsweise setzt man beim erfindungsgemäßen Verfahren eine Aktivkohle ein, die in Pulverform vorliegt und aus Torf gewonnen und mit Dampf aktiviert wurde. Der bei der erfindungsgemäßen Methode bevorzugt verwendete Aktivkohle-Typ hat eine Schüttdichte von durchschnittlich 520 g/l, eine Porenoberfläche (nach BET) von durchschnittlich 600 m²/g und einen pH-Wert von 6,5 bis 7,5. Geeigneterweise sind 80 Gew.-% der Körner durchschnittlich kleiner als 10 µm, d. h., 80 Gew.-% der eingesetzten Aktivkohle weisen vorzugsweise eine Korngröße von 0,01 bis 10 µm auf. Diese Produktdaten besitzt z. B. die Aktivkohle NORIT® PN 5.

Das erfindungsgemäße Verfahren kann man beispielsweise - aber nicht ausschließlich - bei folgenden Alkoxysilanen oder Alkoxysilan-basierenden Zusammensetzungen anwenden: Vinyltrimethoxysilan, Vinyltriethoxysilan, Vinyl-tris(2-methoxy-ethoxy)silan, Vinyl-methyl-dimethoxysilan, 3-Aminopropyltrimethoxysilan, 3-Aminopropyl-triethoxysilan, N-Aminoethyl-3-aminopropyl-trimethoxysilan sowie triaminofunktionelle Propyltrimethoxysilane, wie auch technische Qualitäten besagter Alkoxysilane, sowie Zusammensetzungen oligomerer Organoalkoxysiloxane, z. B. solche mit oligomeren Vinylsiloxanen, wie DYNASYLAN® 6490, das, ausgehend von Vinyltrimethoxysilan, durch eine gezielte Kondensation hergestellt wird, oder DYNASYLAN® 6498, das durch gezielte Kondensation ausgehend von Vinyltriethoxysilan erhältlich ist, sowie Zusammensetzungen mit oligomeren Vinyl/Alkylsiloxanen, wie z. B. DYNASYLAN® 6598, wie insbesondere aus EP 0 518 957 A1 zu entnehmen ist, sowie Zusammensetzungen mit oligomeren Alkylalkoxysiloxanen, wie DYNASYLAN® 9281, vgl. DE 196 24 032 A1, sowie Zusammensetzungen wasserlöslicher, vorwiegend vollständig hydrolysierter Organopolysiloxane, wie insbesondere aus EP 0 675 128 A1, EP 0 716 127 A2 und EP 0 716 128 A2 hervorgeht.

Geeigneterweise kann man beim erfindungsgemäßen Verfahren den Gehalt an sauren Chloriden in einem Alkoxysilan z. B. von rd. 500 Gew.-ppm auf < 10 Gew.-ppm, vorzugsweise auf ≤ 3 Gew.-ppm, d. h. geeigneterweise bis hin zur Nachweisgrenze herabsetzen.

Ferner kann bei Anwendung des erfindungsgemäßen Verfahrens auch der Gesamtchlorgehalt in Alkoxysilanen oder in einer Alkoxysilan-basierenden Zusammensetzung, wie z. B. einer Wasser-haltigen und Vinyltriethoxysilan-Methyltriethoxysilan-Kondensat-basierenden Zusammensetzung, von beispielsweise 330 Gew.-ppm auf 45 Gew.-ppm verringert werden, wobei der Anteil an hydrolysierbarem Chlorid in einfacher und wirtschftlicher Weise von 17 Gew.-ppm auf ≤ 3 Gew.-ppm gemindert werden konnte.

Insbesondere ermöglicht die Anwendung des erfindungsgemäßen Verfahrens in vorteilhafter und überraschender Weise auch eine Verbesserung der Farbzahl ("APHA" gemäß DIN ISO 6271) der Alkoxysilane bzw. der Alkoxysilan-basierenden Zusammensetzungen. Somit ist auch Gegenstand der vorliegenden Erfindung die Verwendung von Aktivkohle nach den Ansprüchen 1 bis 9 zur Minderung des Resthalogengehalts und/oder Farbzahlverbesserung in Alkoxysilanen oder in Alkoxysilan-basierenden Zusammensetzungen.

Ferner ist Gegenstand der vorliegenden Erfindung ein Verfahren zur Minderung des Resthalogengehalts und gleichzeitigen oder alleinigen Verbesserung der Farbzahl ("APHA") in Alkoxysilanen oder in Alkoxysilan-basierenden Zusammensetzungen, in dem man das Alkoxysilan oder die Alkoxysilan-basierende Zusammensetzung nach mindestens einem der Ansprüche 1 bis 10 mit Aktivkohle behandelt.

Die vorliegende Erfindung wird durch die nachfolgenden Beispiele näher erläutert:

### Beipiel 1

826 g eines Reaktionsgemisches aus der Herstellung eines Vinyl-n-Propyl-Silan-Cokondensats nach der Entfernung niedrigsiedender Bestandteile, wie z. B. Ethanol, werden in einem Rundkolben auf 40 °C erwärmt und mit 7,5 g Aktivkohle NORIT® PN 5 versetzt. Die Aktivkohle-Menge entspricht einem Zusatz von 0,9 % auf das Reaktionsgemisch. Das mit Aktivkohle versetzte Produkt wird 15 Minuten bei 40 °C gerührt. Anschließend wird die Aktivkohle durch Filtration mittels eines Druckfilters aus dem Vinyl-n-Propyl-Silan-Cokondensat entfernt. Im Endprodukt sowie im Reaktionsgemisch vor der Aktivkohle-Zugabe wird sowohl das hydrolysierbare Chlorid wie auch das Gesamt-Chlorid bestimmt. Die nachfolgende Tabelle zeigt die Ergebnisse dieser Untersuchungen:

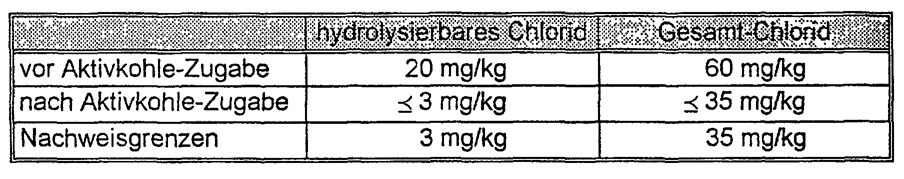

Ein weiterer Vorteil des vorliegenden Verfahrens ist die dabei eintretende Farbzahl-Erniedrigung von 65 APHA auf < 5 APHA.

### Beispiel 2

905 g eines Reaktionsgemisches aus der Herstellung eines Vinyl-Methyl-Silan-Cokondensats nach der Entfernung niedrigsiedender Bestandteile, wie z. B. Ethanol, werden in einem Rundkolben auf 45 °C erwärmt und mit 10,0 g Aktivkohle NORIT® PN 5 versetzt. Die Aktivkohle-Menge entspricht einem Zusatz von 1,1 Gew.-% auf das Reaktionsgemisch. Das mit Aktivkohle versetzte Produkt wird 10 Minuten bei 45°C gerührt. Anschließend wird die Aktivkohle durch Filtration mittels eines Druckfilters aus dem Vinyl-Methyl-Silan-Cokondensat entfernt. Im Endprodukt sowie im Reaktionsgemisch vor der Aktivkohle-Zugabe wird sowohl das hydrolysierbare Chlorid wie auch das Gesamt-Chlorid bestimmt. Die nachfolgende Tabelle zeigt die Ergebnisse dieser Untersuchungen:

| | hydrolysierbares Chlorid | Gesamt-Chlorid |
|---|---|---|
| vor Aktivkohle-Zugabe | 17 mg/kg | 330 mg/kg |
| nach Aktivkohle-Zugabe | ≤ 3 mg/kg | 45 mg/kg |
| Nachweisgrenzen | 3 mg/kg | 35 mg/kg |

Auch hier wurde in vorteilhafter Weise eine Farbzahl-Erniedrigung beobachtet: von 110 APHA auf 10 APHA.

## Patentansprüche

1. Verfahren zur Minderung des Resthalogengehalts in Alkoxysilanen oder in Alkoxysilan-basierenden Zusammensetzungen,
**dadurch gekennzeichnet,**
**daß** man das Alkoxysilan oder die Alkoxysilan-basierende Zusammensetzung mit Aktivkohle behandelt.

2. Verfahren nach Anspruch 1,
**dadurch gekennzeichnet,**
**daß** man die Aktivkohlebehandlung bei einer Temperatur im Bereich von 0 bis 200 °C durchführt.

3. Verfahren nach Anspruch 2,
**dadurch gekennzeichnet,**
**daß** man die Aktivkohlebehandlung bei einer Temperatur im Bereich von 10 bis 100 °C durchführt.

4. Verfahren nach einem der Ansprüche 1 bis 3,
**dadurch gekennzeichnet,**
**daß** man die Aktivkohlebehandlung für die Dauer von 1 Minute bis 8 Stunden durchführt.

5. Verfahren nach Anspruch 4,
**dadurch gekennzeichnet,**
**daß** man die Aktivkohlebehandlung für die Dauer von 2 Minuten bis 1 Stunde durchführt.

6. Verfahren nach mindestens einem der Ansprüche 1 bis 5,
**dadurch gekennzeichnet,**
**daß** das Halogen Chlor ist.

7. Verfahren nach mindestens einem der Ansprüche 1 bis 6,
**dadurch gekennzeichnet,**
**daß** bei der Durchführung der Aktivkohlebehandlung ein Lösemittel zugegen ist.

8. Verwendung von Aktivkohle nach den Ansprüchen 1 bis 7 zur Minderung des Resthalogengehalts und/oder der Farbzahlverbesserung in Alkoxysilanen oder in Alkoxysilan-basierenden Zusammensetzungen.

9. Verfahren zur Minderung des Resthalogengehalts und/oder der Verbesserung der Farbzahl in Alkoxysilanen oder in Alkoxysilan-basierenden Zusammensetzungen, in dem man das Alkoxysilan oder die Alkoxysilan-basierende Zusammensetzung nach einem der Ansprüche 1 bis 8 mit Aktivkohle behandelt.

## Claims

1. A process for lessening the residual halogen content in an alkoxysilane or in an alkoxysilane-based composition, **characterized in that** the alkoxysilane or the alkoxysilane-based composition is treated with activated carbon.

2. A process according to claim 1, **characterised in that** the activated carbon treatment is carried out at a temperature in the range from 0 to 200°C.

3. A process according to claim 2, **characterised in that** the activated carbon treatment is carried out at a temperature in the range from 10 to 100°C.

4. A process according to any of claims 1 to 3, **characterised in that** the activated carbon treatment is carried out for a period of from 1 minute to 8 hours.

5. A process according to claim 4, **characterised in that** the activated carbon treatment is carried out for a period of from 2 minutes to 1 hour.

6. A process according to at least one of claims 1 to 5, **characterised in that** the halogen is chlorine.

7. A process according to at least one of claims 1 to 6, **characterised in that** a solvent is present during the carrying out of the activated carbon treatment.

8. The use of activated carbon according to any of claims 1 to 7 for lessening the residual halogen content and/or improving the colour number in alkoxysilanes or in alkoxysilane-based compositions.

9. A process for lessening the residual halogen content and/or improving the colour number in an alkoxysilane or in an alkoxysilane-based composition, wherein said alkoxysilane or alkoxysilane-based composition is treated with activated carbon according to any one of claims 1 to 8.

## Revendications

1. Procédé de diminution de la teneur en halogène résiduel dans des alkoxysilanes ou dans des compositions à base d'alkoxysilanes,
**caractérisé en ce qu'**
on traite l'alkoxysilane ou la composition à base d'alkoxysilane avec du charbon actif.

2. Procédé selon la revendication 1,
**caractérisé en ce qu'**
on effectue le traitement par le charbon actif à une température dans la plage de 0 à 200°C.

3. Procédé selon la revendication 2,
**caractérisé en ce qu'**
on effectue le traitement par le charbon actif à une température dans la plage de 10 à 100°C.

4. Procédé selon l'une des revendications 1 à 3,
**caractérisé en ce qu'**
on effectue le traitement par le charbon actif pendant une durée allant de 1 minute à 8 heures.

5. Procédé selon la revendication 4,
**caractérisé en ce qu'**
on effectue le traitement par le charbon actif pendant une durée allant de 2 minutes à 1 heure.

6. Procédé selon au moins l'une des revendications 1 à 5,
**caractérisé en ce que**
l'halogène est le chlore.

7. Procédé selon au moins l'une des revendications 1 à 6,
**caractérisé en ce qu'**
au cours de l'exécution du traitement par le charbon actif, un solvant est présent.

8. Utilisation de charbon actif selon les revendications 1 à 7, en vue de la diminution de la teneur en halogène résiduel et/ou de l'amélioration de l'indice de couleur dans des alkoxysilanes ou dans des compositions à base d'alkoxysilanes.

9. Procédé de diminution de la teneur en halogène résiduel et/ou d'amélioration de l'indice de couleur dans des alkoxysilanes ou dans des compositions à base d'alkoxysilanes, selon lequel on traite l'alkoxysilane ou la composition à base d'alkoxysilane conformément à l'une des revendications 1 à 8, avec du charbon actif.
